# EUROPEAN PATENT SPECIFICATION

(11) **EP 2 976 947 B1**
(45) Date of publication and mention of the grant of the patent: **26.06.2019**
(21) Application number: 15176348.9
(22) Date of filing: 10.07.2015
(51) Int. Cl.: A21B 1/08, A21B 1/14

(54) **STEAM TUBE OVEN FOR BREAD PRODUCTS**
DAMPFROHROFEN FÜR BACKWAREN
FOUR À TUBES DE VAPEUR POUR PRODUITS PANIFIÉS

(30) Priority: 24.07.2014 LU 92507
(43) Date of publication of application: 27.01.2016
(73) Proprietor: HEIN S.à.r.l., Fabrique de Fours, 8030 Strassen (LU)
(72) Inventor: SONNET, Armin, 4780 SANKT VITH (BE)
(74) Representative: Office Freylinger

(56) References cited:
- EP-A1- 2 305 036
- EP-A2- 0 121 643
- WO-A1-2009/041872
- FR-A- 1 040 403
- FR-A1- 2 687 899
- GB-A- 303 280
- GB-A- 612 241

## Description

### Technical Field

The present invention generally relates to a steam tube oven for bread products.

### Background Art

Baking ovens, and in particular steam tube ovens, are known from the state of the art and generally comprise a housing defining an internal space, also referred to as internal chamber or baking chamber, therein. A front wall of the housing comprises a door to access the internal space. A number of baking shelves are arranged in the internal space to receive the bread products thereon for baking. The bread products may be placed directly onto the baking shelves or placed on baking trays, which are in turn placed on the baking shelves.

The internal chamber of a steam tube oven is generally heated through a steam heating process powered by a burner, generally burning gas, oil or solids. During this process, fluid is heated by the burner, generally at the bottom side of the steam tube oven, the water being contained in a water reservoir or tube(s) heated either directly or indirectly by the burner. The tubes are hermetic tubes, referred to as heat pipes or Perkins tubes, containing a working fluid, which is vaporized by a heat supplied to the bottom of the tube. The vapour travels to the top of the tube, where it condenses. The liquid then drains back to the bottom of the tube by gravity, and the cycle repeats. The tubes are formed by vertical tubular risers having a number of substantially horizontal heating tubes. The horizontal heating tubes form the baking shelves.

Steam is created and rises through a number of vertical tubular risers to a plurality of substantially horizontal heating tubes that extend through the chamber from its back to its front side.

Such a steam heating process in a steam tube oven for baking bread has many advantages, principally in delivering outstanding bakery products with a simple and durable technology.

Typically, a burner at the bottom side of the steam tube oven is provided for heating water in the heating tubes. The provision of a thermal stone firing, required by the burner, may be considered by some as a disadvantage due to its construction using refractory bricks, which needs extensive manpower during construction. On the other hand, such thermal stone firing can easily last for up to more than 40 years with minimal maintenance.

Alternatively, electric ovens have been suggested and provided. Such electric ovens comprise electric resistances arranged directly in the heating shelf. An electric oven has the advantage of being more universally deployable, e.g. in locations where gas feed or fume extraction is not available or not allowed. Electric ovens on the other hand provide a more direct and intense heat and it is generally understood that they do not produce as good results as steam tube ovens. Another solution suggests an oven that offers both possibilities of electric and gas heating. An example can be found in FR 2 687 899 A1. Such hybrid ovens are more complex and more expensive solutions. Moreover, the two heating systems cannot be placed at the same spot offering a less optimize overall performance of the oven.

### Technical Problem

The aim of the present invention is to provide an alternative solution for heating of a steam tube oven. This object is achieved by a steam tube oven as claimed in claim 1.

### General Description of the Invention

A steam tube oven for baking bread products has a housing defining an internal chamber therein, the steam tube oven comprising a plurality of hermetic heating tubes comprising a riser portion and at least one generally horizontal heating portion, wherein the heating portion extends from the back of the internal chamber to the front thereof so as to form a baking shelf for receiving the bread products thereon. The riser portion is connected to a fluid reservoir heated by heating means. The housing has a back side and a front side closed by a door defining therebetween a depth of the oven, two lateral sides defining therebetween a width of the oven, and upper and lower sides defining therebetween a height of the oven, these sides delimiting therebetween an internal chamber. According to an aspect of the invention, the heating means comprises at least one electrical heating element that is arranged, inside the fluid reservoir by being surrounded by the fluid contained in the fluid reservoir.

Heating of the internal chamber is performed by steam circulation through a plurality of hermetic heating tubes extending in the internal chamber while being uniformly distributed in this chamber, the heating tubes receiving the steam from the fluid reservoir heated by the heating means.

In the steam tube oven according to the present invention, the heating means comprises at least one electrical heating element. The electrical heating element is preferably located in a hollow internal space of the fluid reservoir filled with fluid, generally water. The hollow internal space may be coaxially arranged within the fluid reservoir, such that fluid in its liquid phase is distributed all around the electrical heating element arranged in the hollow internal space. This ensures a good heat transfer between the heating means and the fluid to be heated, which ensures that the steam tube oven is as efficient as possible.

The use of electrical heating elements has the advantage of being universally usable in various locations. Such ovens can be installed and used in locations where gas feed is not available or not allowed. Also, the oven does not need any installation for evacuating flue gases. Not only problems associated with open flames, fumes or smell, but also with legislation and authorisations may be avoided.

Furthermore, electrical heating elements can be easily and quickly temperature regulated by controlling the power supplied to the heating element. Thus, the oven is reactive to temperature changes. The temperature inside the oven can be quickly adapted to the desired temperature in response to various factors, such as e.g. the number of products placed in the oven or the length of time the door has remained open.

Also, it has been found that a steam tube oven with electrical heating elements is, quite surprisingly, more efficient than a steam tube oven with gas burner. Indeed, in order to obtain a temperature of about 240°C in the internal chamber of the oven, the fluid in the fluid reservoir is heated to about 250°C if electrical heating elements are used. In case a gas burner is used, the fluid in the fluid reservoir is heated to about 300°C, while the flue gas being used to heat the fluid can range from 300 to 600°C.

Preferably, the hollow internal space has a diameter essentially corresponding to the outer diameter of the electrical heating element, thereby ensuring good heat transfer from the electrical heating element to the fluid reservoir and the fluid contained therein.

Advantageously, the electrical heating element is removably arranged inside the fluid reservoir. To have removable heating element(s) permits an easy replacement of such heating elements when out of order. It also permits to easily modify the heating power by replacing the heating element with a more efficient heating element. This may be done for example if the steam tube oven is upgraded to baking a different kind of product, i.e. in respect of the type, the number and/or the size of bread products to be baked.

The fluid reservoir may comprise an opening at one end for introduction of the electrical heating element therein and for removal of the electrical heating element therefrom. A cover is then provided for sealingly closing the opening. The opening of the fluid reservoir is provided with removable locking and sealing means for a waterproof fixation of the electrical heating element inside the fluid reservoir.

Preferably, the steam tube oven comprises a steam heating system having a plurality of heating tubes arranged so as to form one or more essentially horizontal heating shelf. Advantageously, when an alimentary product is arranged within the steam tube oven, a first horizontal heating shelf is arranged underneath the alimentary product, while a second horizontal heating shelf is arranged above the alimentary product. Thus, heat is provided to both the upper and lower sides of the alimentary product to be baked, thereby ensuring an even baking of the product.

The fluid reservoir is preferably located at the bottom of the steam tube oven, at least one substantially vertical tubular riser connecting the fluid reservoir to a vertical array of heating tubes.

Each hermetic heating tube may comprise a riser portion and a plurality of generally horizontal heating portions, the plurality of heating portions forming a plurality of essentially horizontal baking shelves. The steam tube oven may thus comprise a number of baking shelves for receiving bread products to be baked.

Preferably, the heating portions of the hermetic heating tubes are slightly inclined upwards in direction of the front side of the steam tube oven. Indeed, the heating portions may be arranged at an angle between 0 and 5° with respect to the horizontal. This ensures that, after condensation, fluid flows back towards the riser portion to be fed back to the fluid reservoir.

Each riser portion may present, at its bottom, a substantially horizontal lower tube part for connection to the fluid reservoir.

The fluid reservoir is preferably in the form of a pipe of greater diameter than the lower horizontal tube part of the riser portion.

Advantageously, the electrical heating element is substantially cylindrical. The cylindrical form of the heating element helps its positioning into the fluid reservoir or its removing therefrom. A uniform distribution of fluid in its liquid phase surrounding the electrical heating element is also of advantage to obtain efficient heating of the fluid in the fluid reservoir.

In a first embodiment of the steam tube oven of the present invention, a respective fluid reservoir is associated with each riser portion, the fluid reservoir being connected to its riser portion at its side facing the back side of the steam tube oven, wherein the fluid reservoir extends along the depth of the oven.

According to this embodiment, an electrical heating element, generally one per fluid reservoir, is arranged within the fluid reservoir and is surrounded by the fluid located in the fluid reservoir. Through the opening directed toward the front side of the oven, the electrical heating element can be easily introduced into the fluid reservoir and removed therefrom from the front of the oven. A free space at the level of the fluid reservoir and corresponding to the depth dimension of the heating element should be left in front of the oven for positioning the heating element in the fluid reservoir and for its removal from the fluid reservoir.

Preferably, an adapter is provided at the side of the fluid reservoir facing the backside of the steam tube oven, the adapter accommodating for a difference in diameter between the riser portion and the fluid reservoir. Such an adapter also ensures a fluid distribution in the fluid reservoir over the whole of its depth so that the electrical heating element is totally surrounded by water, preferentially by gravity.

Preferably, an auxiliary passage communicates at one end with the fluid reservoir at the vicinity of its side facing the front side of the oven and at the other end with the riser portion upstream the heating portions. Such an auxiliary fluid passage allows for an exchange of fluid and steam between the fluid reservoir and the riser portion not only from the rear portion of the fluid reservoir, but also from its front portion.

The fluid reservoir may be slightly inclined downwards when extending to its front side. The distribution of fluid in the fluid reservoir is improved by slightly inclining the fluid reservoir toward the bottom in direction to the front side of the oven as already mentioned. Such inclination may be at an angle between 0 and 5° with respect to the horizontal.

In a second embodiment of the steam tube oven of the present invention, the at least one fluid reservoir is associated with at least one part of the plurality of riser portions, the fluid reservoir extending along the width of the oven and being connected to the at least one part of riser portions on its longitudinal side, wherein the fluid reservoir extends along the width of the oven.

According to this second embodiment, a single fluid reservoir is associated with a number of riser portions. The fluid reservoir extends along the width of the oven. An important advantage of connecting a plurality of riser portions along the depth of the fluid reservoir is that it can be ensured that fluid in its liquid phase is homogenously distributed along the depth of the fluid reservoir and surrounds the electrical heating elements. An efficient heat transfer from the electrical heating elements to the fluid is thereby guaranteed.

Preferably, a plurality of electrical heating elements is arranged within one fluid reservoir. The plurality of electrical heating elements in the fluid reservoir allows for a better control of heat delivered to the riser portions. Even in case one of the electrical heating elements fails, the necessary heat transfer can still be delivered through increasing the power delivered to the remaining electrical heating elements. Replacement of the failing electrical heating elements can then be carried out during the next programmed maintenance stoppage.

The steam tube oven may comprise n fluid reservoirs, n being an integer equal or superior to 2, the plurality of riser portions being separated in n parts and each part being connected to a specific fluid reservoir.

Successive tubular riser portions along the width of the steam tube oven are preferably alternatively connected to the n fluid reservoirs.

Preferably, the steam tube oven comprises n fluid reservoirs, n being an integer equal or superior to 2, these fluid reservoirs being in communication with one another and being pooled together to distribute steam into the plurality of riser portions.

Advantageously, the fluid reservoir is formed by an outer pipe and a plurality of inner pipes, wherein the inner pipes are dimensioned so as to receive the electrical heating element therein. The front end and back end of the outer pipe being sealed such that a closed space is formed between the outer pipe and the inner pipes, the closed space receiving said fluid therein.

Preferably, the inner pipes are open to the atmosphere at both ends. This allows electrical heating elements to be accessed from either the right or left side of the steam tube oven. Indeed, depending on the intended installation location, only one of the sides of the oven may be accessible. Be providing inner pipes open at both ends, the future installation location of the oven does not need to be considered during the construction of the fluid reservoir.

The fluid reservoir may comprise an auxiliary inner pipe for receiving a temperature measurement device therein. Such an auxiliary inner pipe may be of different diameter and may be located somewhere between neighbouring inner pipes.

Advantageously a corrugated sheet may be arranged between neighbouring heating portions of a baking shelf. Such a corrugated sheet allows to direct heat radiating from the heating portions either more upwards or more downwards. As alternate heating portions are connected to different fluid reservoirs, it is possible to apply different temperatures to alternate heating portions. Consequently, the bread product to be baked can be subjected to different temperatures from above and from below.

### Brief Description of the Drawings

Preferred embodiments of the invention will now be described, by way of example, with reference of the accompanying drawings, wherein:
- Fig.1: is a schematic lateral view of a steam heating system of a steam tube oven in accordance with a first embodiment of the invention;
- Fig.2: is a schematic lateral view of a steam heating system of a steam tube oven in accordance with a second embodiment of the invention; and
- Fig.3: is a perspective view of a lower portion of the steam heating system of Fig.2 showing two fluid reservoirs;
- Fig.4: is a lateral view of four fluid reservoirs of a steam tube oven in accordance with a second embodiment of the invention; and
- Fig.5: is a frontal view of a lower portion of the steam heating system with four fluid reservoirs in accordance with a second embodiment of the invention.

### Description of Preferred Embodiments

A steam tube oven for baking bread products generally comprises a back side and a front side closed by a door defining therebetween a depth for the steam tube oven, two lateral sides defining therebetween a width for the oven, an upper and lower sides defining therebetween a height for the oven. These sides are not shown in the figures. Within an internal chamber delimited by these sides is arranged a closed steam heating system for heating the internal chamber, also referred to as baking chamber.

The steam heating system comprises a plurality of heating tubes 10 extending in the internal chamber while being uniformly distributed therein. The plurality of heating tubes 10 receives the steam from at least one fluid reservoir 16 heated by heating means. The fluid reservoir 16 presents a hollow internal space 22 filled with fluid to heat and in which, according to the present invention, one or more electrical heating elements are provided. Heating of the internal space of the fluid reservoir 16 transforms the fluid into steam which then rises though the steam heating system, advantageously through one or more tubular riser portions 12 connected at one end with the fluid reservoir 16 and feeding into at least one heating portion 14, preferably a plurality of heating portions 14.

The heating portions 14 extend from the back side to the front side of the oven by forming at least one horizontal baking shelf. Generally, at least two, preferably four, horizontal baking shelves are provided for receiving bread products to be baked thereon.

The heating portions 14 are distributed uniformly along the width of the internal chamber between the two lateral sides of the oven to perform a uniform heating of the internal chamber.

The heating tubes 10 are advantageously seamless hermetic tubes which may support pressure up to 500 bar. Each heating portion 14 may be welded, brazed or bonded to a respective riser portion 12.

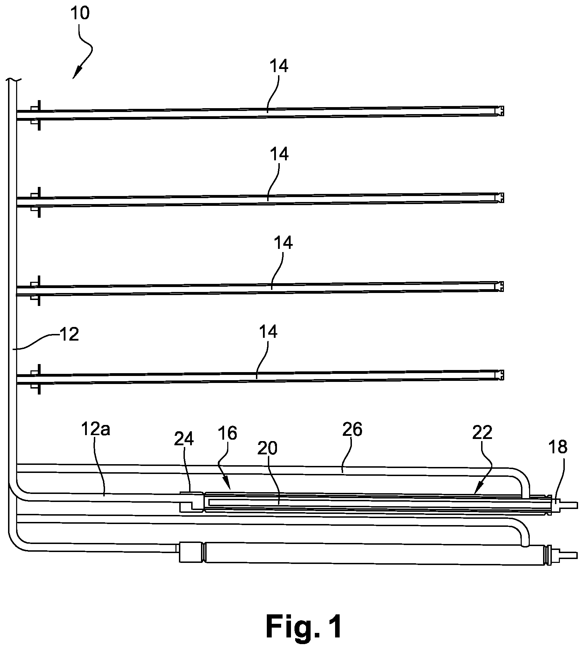

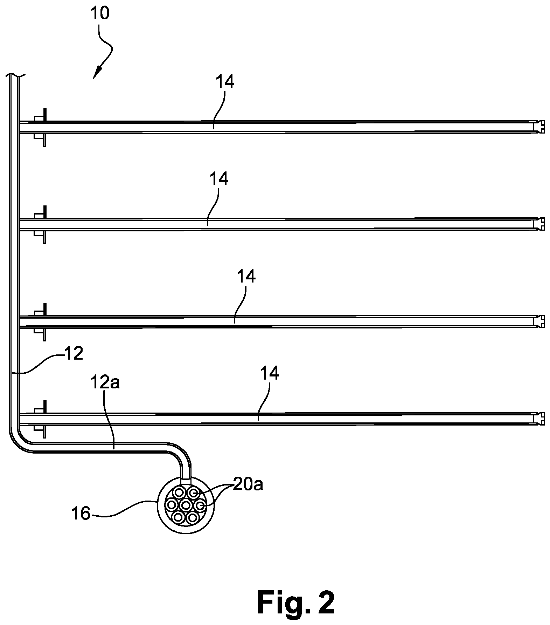

In the steam tube oven according to the present invention, the heating means consist of at least one electrical heating element 20, 20a. This at least one electrical element may be a single electrical heating element as referenced 20 in Fig. 1 or a plurality of electrical heating elements as referenced 20a in Fig.2. The at least one electrical heating element 20, 20a is removably located directly in the hollow internal space 22 of the fluid reservoir 16 filled with water, i.e. the heating element is surrounded by the fluid while being removable from the fluid reservoir 16. The electrical heating element 20, 20a may be substantially cylindrical and have a diameter essentially corresponding to the diameter of the internal hollow space 22 of the fluid reservoir 16 but this is not limitative.

The fluid reservoir 16 is located at the bottom of the steam tube oven, at least one substantially vertical riser portion 12 connecting the fluid reservoir 16 to the plurality of heating portions 14.

Each vertical riser portion 12 is bent at its lower end to present an extending substantially horizontal lower tube part 12a which connects to the fluid reservoir 16.

Two embodiments of the present invention will be described now in more detail. It is considered that these embodiments are not the sole embodiments to carry out the present invention and are not limitative.

A first embodiment of the present invention is illustrated in Fig. 1. In this embodiment one fluid reservoir 16 is associated with one heating tube 10. In Fig.1, which represents a lateral view of the internal chamber to be heated, only one heating tube 10 is shown; further heating tubes 10 being distributed along the width of the steam tube oven one after the other, i.e. behind and at distance to the heating tube 10 shown is Fig. 1.

The fluid reservoir 16 is connected to the riser portion 12 of the heating tube 10 at its side facing the back side of the steam tube oven. The fluid reservoir 16 receives a single electrical heating element 20 in its interior, the single electrical heating element 20 being surrounded by fluid in the internal space 22 of the fluid reservoir 16. In Fig.1, only two fluid reservoirs 16 are shown in parallel for better illustration. In practice however, each heating tube 10 is advantageously associated with one fluid reservoir respectively. The fluid reservoir 16 and the single electrical heating element 20 both extend along the depth of the steam tube oven.

Each fluid reservoir 16 has an opening 18 directed toward the front side of the oven for introduction of the electrical heating element 20. The electrical heating element 20 is pushed perpendicularly towards the backside of the oven through the opening 18 for its introduction in the fluid reservoir 16 and pulled out in the reverse direction to be removed from the fluid reservoir 16.

A free space at the level of the fluid reservoir 16 and corresponding to the length dimension of the heating element 20 should be left in front of the oven for positioning the heating element 20 in the fluid reservoir 16 and for its removal.

The opening 18 of the fluid reservoir 16 is provided with a cover (not shown) for a waterproof fixation of the electrical heating element 20 inside the fluid reservoir 16.

At the longitudinal side of the fluid reservoir 16 facing the backside of the oven, an adapter 24 is provided between the lower tube part 12a of the riser portion 12 and the fluid reservoir 16. This adapter 24 ensures a fluid distribution in the fluid reservoir 16 over its whole depth so that the electrical heating element 20 is totally surrounded by water, preferentially by gravity. The distribution of fluid in the fluid reservoir 16 is also improved by slightly inclining the fluid reservoir 16 toward the bottom in direction towards the front side of the oven.

An auxiliary fluid passage 26 may be provided parallel to and at distance from the lower tube part 12a. This auxiliary fluid passage 26 communicates at one end with the fluid reservoir 16 at the vicinity of its side facing the front side of the oven. At the other end, the auxiliary passage 26 communicates with the riser portion 12 upstream of the heating portion 14, i.e. before the connection of the riser portion 12 with the lower heating portion 14 it supports. Advantageously, the auxiliary fluid passage 26 connects its associated riser portion 12 just slightly above the lower horizontal tube part 12a.

A second embodiment of the present invention is illustrated in Fig.2. The arrangement of riser portions 12 and heating portions 14 is the same as that shown in Fig.1 and will thus not be described in detail.

According to this second embodiment, a plurality of riser portions 12 is connected to a single fluid reservoir 16 arranged along the width of the steam tube oven.

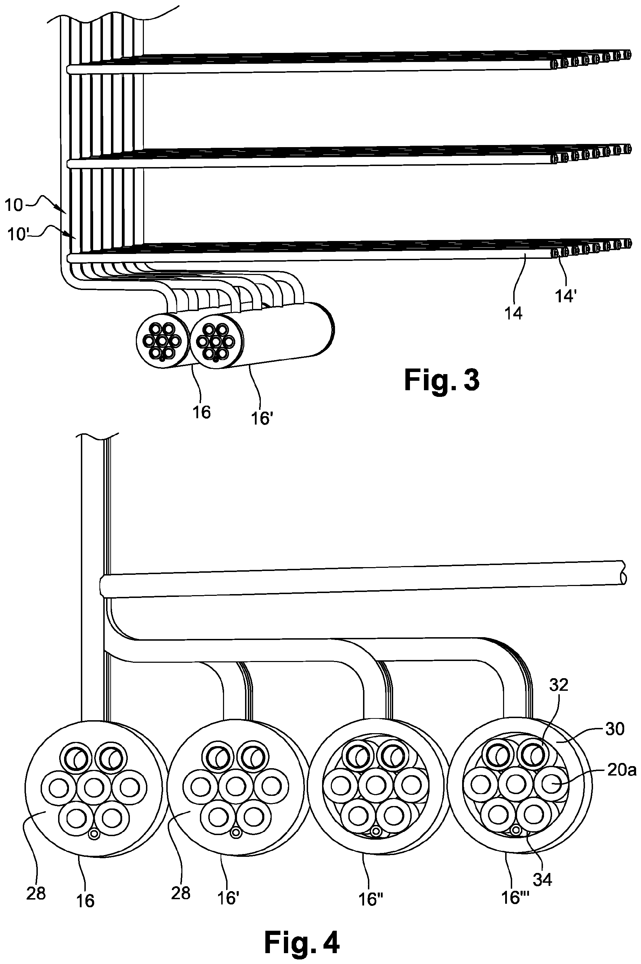

Generally, n fluid reservoirs 16 are provided, with n being an integer equal to or superior to 2. While in Fig.2, only one such fluid reservoir 16 is represented, Fig.3 shows a configuration with two fluid reservoirs 16, 16'. The plurality of riser portions 12 is divided into two parts, each part being connected to one fluid reservoir 16, 16'. Successive riser portions 12 along the width of the oven are alternatively distributed to the four fluid reservoirs 16, 16' to provide a uniform heating of the internal chamber of the oven. Instead of being connected to an end of the fluid reservoir 16 according to the first embodiment, successive riser portions 12 which are associated with one of the fluid reservoirs 16, 16' are connected along the length of that fluid reservoir 16, 16'.

In this embodiment, the fluid reservoirs 16, 16' extend along the width of the oven. These fluid reservoirs 16, 16' receive a plurality of electrical heating elements 20a therein.

To receive the plurality of electrical heating elements 20a, the fluid reservoir 16, 16' comprises an opening 18 directed toward one of the lateral sides of the oven and a waterproof cover xx closing this opening 18.

As the heating elements 20a are positioned in the fluid reservoir 16 from a lateral side of the steam tube oven, a free space should be provided laterally to the oven at the level of each fluid reservoir 16, 16' to install and remove heating elements into or from the fluid reservoirs 16, 16'.

As can be clearly seen on Fig.3, alternate heating tubes 10, 10' are connected to respective fluid reservoirs 16, 16'. Consequently, alternate heating portions 14, 14' of the heating tubes 10, 10' are connected to respective fluid reservoirs 16, 16'.

A close-up of the lower section of the steam heating system is shown in Fig.4. This shows four fluid reservoirs 16, 16', 16", 16"'. The first two fluid reservoirs 16, 16' are shown with the end covers 28 in place, while the other two fluid reservoirs 16", 16'" are shown without their end covers. Referring to the fourth fluid reservoir 16'" of Fig.4, it can be seen that this is formed by an outer pipe 30 and, arranged therein, seven inner pipes 32 and a smaller, auxiliary inner pipe 34. The inner pipes 32 are dimensioned so as to receive electrical heating elements 20a therein. The smaller, auxiliary inner pipe 34 is configured for receiving a temperature measurement device therein.

With the end covers 28 in place, a closed chamber is formed between the outer pipe 30 and the (auxiliary) inner pipes 32, 34. This closed chamber is configured to withstand the necessary pressure and heat constraints it is subjected to.

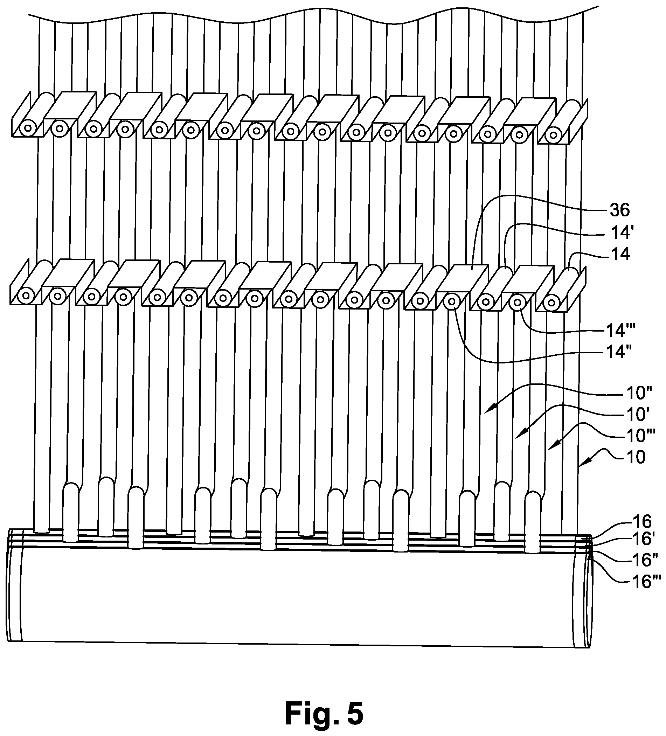

Fig.6 shows four fluid reservoirs (16, 16', 16", 16'") with their associated heating tubes (10, 10', 10", 10'") and heating portions (14, 14', 14", 14'"). A corrugated sheet 36 is arranged between neighbouring heating portions of a baking shelf. The corrugated sheet 36 directs most of the heat radiating from the heating portions either upwards or downwards. In the particular embodiment shown in Fig.5, the heating portions (14, 14') are arranged above the corrugated sheet 36, i.e. most of the heat radiating from heating portions (14, 14') is directed upwards. On the other hand, the heating portions (14', 14'") are arranged below the corrugated sheet 36, i.e. most of the heat radiating from heating portions (14", 14"') is directed downwards. While the upwards radiating heating portions (14, 14') are connected to a first set of fluid reservoirs (16, 16'), the downwards radiating heating portions (14", 14'") are connected to a second set of fluid reservoirs (16", 16'"). As the heating within different fluid reservoirs (16, 16', 16", 16'") can be individually controlled, it is possible to apply different temperatures to the upwards radiating heating portions (14, 14') and to the downwards radiating heating portions (14", 14'"), thereby better controlling the baking of the bread product.

**Legend of Reference Numbers:**

| | | | |
|---|---|---|---|
| 10 | heating tube | 20a | heating element |
| 12 | riser portion | 22 | hollow internal space |
| 12a | lower tube part | 24 | adapter |
| 14 | heating portion | 26 | auxiliary fluid passage |
| 16 | fluid reservoir | 28 | end cover |
| 16' | fluid reservoir | 30 | outer pipe |
| 16" | fluid reservoir | 32 | inner pipes |
| 16'" | fluid reservoir | 34 | auxiliary inner pipe |
| 18 | opening | 36 | corrugated sheet |
| 20 | heating element | | |

## Claims

1. Steam tube oven for baking bread products, the steam tube oven presenting a housing defining an internal chamber therein, the steam tube oven comprising a plurality of hermetic heating tubes (10) comprising a riser portion (12) and at least one generally horizontal heating portion (14), wherein the heating portion (14) extends from the back of the internal chamber to the front thereof so as to form a baking shelf for receiving the bread products thereon, the steam tube oven further comprising a fluid reservoir (16, 16', 16", 16"') heated by heating means, wherein the riser portion (12) is fluidly connected to the fluid reservoir (16, 16', 16", 16'")
**characterised in that**
the heating means comprises at least one electrical heating element (20, 20a) which is arranged inside the fluid reservoir (16, 16', 16", 16'") by being surrounded by the fluid in its liquid phase contained in the fluid reservoir (16, 16', 16", 16'").

2. Steam tube oven according to claim 1, wherein the fluid reservoir (16, 16', 16", 16'") comprises a hollow internal space (22) for receiving the electrical heating element (20, 20a) therein, the hollow internal space (22) preferably being coaxially arranged within the fluid reservoir (16, 16', 16", 16'").

3. Steam tube oven according to claim 2, wherein the hollow internal space (22) has a diameter essentially corresponding to the outer diameter of the electrical heating element (20, 20a).

4. Steam tube oven according to any of claims 1 to 3, wherein the at least one electrical heating element (20, 20a) is removably arranged inside the fluid reservoir (16, 16', 16", 16'").

5. Steam tube oven according to any of claims 1 to 4, wherein the fluid reservoir (16, 16', 16", 16'") comprises an opening (18) at one end for introduction of the electrical heating element (20, 20a) therein and for removal of the electrical heating element (20, 20a) therefrom, and wherein a cover is provided for sealingly closing the opening (18).

6. Steam tube oven according to any of claims 1 to 5, wherein each hermetic heating tube (10) comprises a riser portion (12) and a plurality of generally horizontal heating portions (14), the plurality of heating portions (14) forming a plurality of essentially horizontal baking shelves.

7. Steam tube oven according to any of claims 1 to 6, wherein the heating portions (14) of the hermetic heating tubes (10) are slightly inclined upwards in direction of the front side of the steam tube oven.

8. Steam tube oven according to any of claims 1 to 7, wherein each riser portion (12) presents at its bottom a substantially horizontal lower tube part (12a) for connection to the fluid reservoir (16, 16', 16", 16"'), the fluid reservoir (16, 16', 16", 16'") preferably being in the form of a pipe of greater diameter than the lower horizontal tube part (12a) of the riser portion (12).

9. Steam tube oven according to any of claims 6 to 8, wherein a respective fluid reservoir (16) is associated to each riser portion (12), the fluid reservoir (16) being connected to its riser portion (12) at its side facing the back side of the steam tube oven, wherein the fluid reservoir (16) extends along the depth of the steam tube oven, wherein the steam tube oven preferably further comprises an adapter (24) at the side of the fluid reservoir (16) facing the back side of the steam tube oven, the adapter (24) accommodating for a difference in diameter between the riser portion (12, 12a) and the fluid reservoir (16).

10. Steam tube oven according to claim 9, further comprising an auxiliary fluid passage (26), this auxiliary passage (26) communicating at one end with the fluid reservoir (16) at the vicinity of its side facing the front side of the back oven and at the other end with the riser portion (12) upstream the heating portions (14).

11. Steam tube oven according to claim 9 or 10, wherein the fluid reservoir (16) is slightly inclined downwards when extending to its front side.

12. Steam tube oven according to anyone of claims 6 to 8, wherein one fluid reservoir (16, 16', 16", 16"') is associated with at least one part of the plurality of riser portions (12), the fluid reservoir (16, 16', 16", 16'") extending along the width of the steam tube oven and being connected to the at least one part of riser portions (12) on its longitudinal side, wherein the fluid reservoir (16, 16', 16", 16'") extends along the width of the steam tube oven, a plurality of electrical heating elements (20a) preferably being arranged within said fluid reservoir (16, 16', 16", 16'").

13. Steam tube oven according to claim 12, comprising n fluid reservoirs (16, 16', 16", 16'"), n being an integer equal or superior to 2, the plurality of riser portions (12) being separated in n parts and each part being connected to a specific fluid reservoir (16, 16', 16", 16'"), successive riser portions (12) along the width of the steam tube oven preferably being alternatively connected to the n fluid reservoirs (16, 16', 16", 16'").

14. Steam tube oven according to claim 12 or 13, comprising n fluid reservoirs (16, 16', 16", 16'"), n being an integer equal or superior to 2, these fluid reservoirs (16, 16', 16", 16'") being in communication with one another and are pooled together to distribute steam into the plurality of riser portions (12).

15. Steam tube oven according to anyone of claims 12 to 14, wherein said fluid reservoir (16, 16', 16", 16'") is formed by an outer pipe (30) and a plurality of inner pipes (32), said inner pipes being dimensioned so as to receive said electrical heating element (20a) therein, the front end and back end of said outer pipe being sealed such that a closed space is formed between said outer pipe (30) and said inner pipes (32), said closed space receiving said fluid therein; wherein said inner pipes (32) are preferably open to the atmosphere at both ends and/or wherein said fluid reservoir (16, 16', 16", 16'") preferably comprises an auxiliary inner pipe (34) for receiving a temperature measurement device therein.

16. Steam tube oven as claimed in anyone of claims 12 to 15, wherein said baking shelf comprises a corrugated sheet (36) arranged between neighbouring heating portions (14).

## Patentansprüche

1. Dampfrohrofen zum Backen von Brotprodukten, wobei der Dampfrohrofen ein Gehäuse aufweist, das eine innere Kammer darin definiert, wobei der Dampfrohrofen eine Vielzahl von hermetischen Heizrohren (10) aufweist, die einen Steigabschnitt (12) und mindestens einen im Allgemeinen horizontalen Heizabschnitt (14) aufweisen, wobei sich der Heizabschnitt (14) von der Rückseite der Innenkammer bis zu deren Vorderseite erstreckt, so dass ein Backregal zur Aufnahme der Brotprodukte darauf gebildet ist, wobei der Dampfrohrofen darüber hinaus einen durch Heizmittel erwärmten Fluidbehälter (16, 16', 16", 16"') aufweist, wobei der Steigabschnitt (12) mit dem Fluidbehälter (16, 16', 16", 16'") in Fluidverbindung steht.
**dadurch gekennzeichnet, dass**
das Heizmittel mindestens ein elektrisches Heizelement (20, 20a) aufweist, das innerhalb des Fluidbehälters (16, 16', 16", 16'") angeordnet ist, indem es von dem in dem Fluidbehälter (16, 16', 16", 16'") enthaltenen Fluid in seiner flüssigen Phase umgeben ist.

2. Dampfrohrofen gemäß Anspruch 1, wobei der Fluidbehälter (16, 16', 16", 16'") einen hohlen Innenraum (22) zur Aufnahme des elektrischen Heizelements (20, 20a) darin umfasst, wobei der hohle Innenraum (22) vorzugsweise koaxial innerhalb des Fluidbehälters (16, 16', 16", 16'") angeordnet ist.

3. Dampfrohrofen gemäß Anspruch 2, wobei der hohle Innenraum (22) einen Durchmesser aufweist, der im Wesentlichen dem Außendurchmesser des elektrischen Heizelements (20, 20a) entspricht.

4. Dampfrohrofen gemäß einem der Ansprüche 1 bis 3, wobei das mindestens eine elektrische Heizelement (20, 20a) innerhalb des Fluidbehälters (16, 16', 16", 16"') abnehmbar angeordnet ist.

5. Dampfrohrofen gemäß einem der Ansprüche 1 bis 4, wobei der Fluidbehälter (16, 16', 16", 16'") an einem Ende eine Öffnung (18) zum Einführen des elektrischen Heizelements (20, 20a) und zum Entfernen des elektrischen Heizelements (20, 20a) aufweist, und wobei eine Abdeckung zum dichten Schließen der Öffnung (18) vorgesehen ist.

6. Dampfrohrofen gemäß einem der Ansprüche 1 bis 5, wobei jedes hermetische Heizrohr (10) einen Steigabschnitt (12) und eine Vielzahl von im Allgemeinen horizontalen Heizabschnitten (14) umfasst, wobei die Vielzahl von Heizabschnitten (14) eine Vielzahl von im Wesentlichen horizontalen Backregalen bildet.

7. Dampfrohrofen gemäß einem der Ansprüche 1 bis 6, wobei die Heizabschnitte (14) der hermetischen Heizrohre (10) nach oben in Richtung der Vorderseite des Dampfrohrofens leicht geneigt sind.

8. Dampfrohrofen gemäß einem der Ansprüche 1 bis 7, wobei jeder Steigabschnitt (12) an seinem Boden ein im Wesentlichen horizontales unteres Rohrteil (12a) zur Verbindung mit dem Fluidbehälter (16, 16', 16", 16'") aufweist, wobei der Fluidbehälter (16, 16', 16", 16'") vorzugsweise in Form eines Rohres mit einem größeren Durchmesser als das untere horizontale Rohrteil (12a) des Steigabschnitts (12) vorliegt.

9. Dampfrohrofen gemäß einem der Ansprüche 6 bis 8, wobei jedem Steigabschnitt (12) ein entsprechender Fluidbehälter (16) zugeordnet ist, wobei der Fluidbehälter (16) mit seinem Steigabschnitt (12) an seiner der Rückseite des Dampfrohrofens zugewandten Seite verbunden ist, wobei sich der Fluidbehälter (16) entlang der Tiefe des Dampfrohrofens erstreckt, wobei der Dampfrohrofen vorzugsweise ferner einen Adapter (24) an der Seite des Fluidbehälters (16) aufweist, der der Rückseite des Dampfrohrofens zugewandt ist, wobei der Adapter (24) einen Durchmesserunterschied zwischen dem Steigabschnitt (12, 12a) und dem Fluidbehälter (16) ausgleicht.

10. Dampfrohrofen gemäß Anspruch 9, der darüber hinaus einen Hilfs-Fluiddurchgang (26) aufweist, wobei dieser Hilfsdurchgang (26) an einem Ende mit dem Fluidbehälter (16) in der Nähe seiner der Vorderseite des Ofens zugewandten Seite und am anderen Ende mit dem Steigabschnitt (12) stromaufwärts der Heizabschnitte (14) in Verbindung steht.

11. Dampfrohrofen gemäß Anspruch 9 oder 10, wobei der Fluidbehälter (16) in seiner Erstreckung zu seiner Vorderseite leicht nach unten geneigt ist.

12. Dampfrohrofen gemäß einem der Ansprüche 6 bis 8, wobei ein Fluidbehälter (16, 16', 16", 16"') mindestens einem Teil der Vielzahl von Steigabschnitte (12) zugeordnet ist, wobei sich der Fluidbehälter (16, 16', 16", 16'") entlang der Breite des Dampfrohrofens erstreckt und mit dem mindestens einen Teil der Steigabschnitte (12) an seiner Längsseite verbunden ist, wobei sich der Fluidbehälter (16, 16', 16", 16'") entlang der Breite des Dampfrohrofens erstreckt, wobei eine Vielzahl von elektrischen Heizelementen (20a) vorzugsweise innerhalb des Fluidbehälters (16, 16', 16", 16'") angeordnet ist.

13. Dampfrohrofen gemäß Anspruch 12, der n Fluidbehälter (16, 16', 16", 16'") aufweist, wobei n eine ganze Zahl gleich oder größer als 2 ist, wobei die Vielzahl von Steigabschnitten (12) in n Teile aufgeteilt und jedes Teil mit einem spezifischen Fluidbehälter (16, 16', 16", 16'") verbunden ist und aufeinanderfolgende Steigabschnitte (12) entlang der Breite des Dampfrohrofens vorzugsweise abwechselnd mit den n Fluidbehältern (16, 16', 16", 16'") verbunden sind.

14. Dampfrohrofen gemäß Anspruch 12 oder 13, der n Fluidbehälter (16, 16', 16", 16"') aufweist, wobei n eine ganze Zahl gleich oder größer als 2 ist, wobei diese Fluidbehälter (16, 16', 16", 16'") miteinander in Verbindung stehen und zusammengefasst sind, um Dampf in die Vielzahl von Steigabschnitten (12) zu verteilen.

15. Dampfrohrofen gemäß einem der Ansprüche 12 bis 14, wobei der Fluidbehälter (16, 16', 16", 16'") durch ein Außenrohr (30) und eine Vielzahl von Innenrohren (32) gebildet ist, wobei die Innenrohre so bemessen sind, dass sie das elektrische Heizelement (20a) darin aufnehmen, wobei das vordere Ende und das hintere Ende des Außenrohrs abgedichtet sind, so dass ein geschlossener Raum zwischen dem Außenrohr (30) und den Innenrohren (32) gebildet wird, wobei der geschlossene Raum das Fluid darin aufnimmt; wobei die Innenrohre (32) an beiden Enden vorzugsweise zur Atmosphäre hin offen sind und/oder wobei der Fluidbehälter (16, 16', 16", 16'") vorzugsweise ein Hilfsinnenrohr (34) zur Aufnahme einer Temperaturmessvorrichtung darin aufweist.

16. Dampfrohrofen gemäß einem der Ansprüche 12 bis 15, wobei das Backregal ein gewelltes Blech (36) aufweist, das zwischen benachbarten Heizabschnitten (14) angeordnet ist.

## Revendications

1. Four à tubes vapeur pour cuire des produits boulangers, le four à tubes vapeur présentant un boîtier y définissant une chambre intérieure, le four à tubes vapeur comprenant une pluralité de tubes chauffants hermétiques (10) comprenant une portion de colonne (12) et au moins une portion de chauffe généralement horizontale (14), dans lequel la portion de chauffe (14) s'étend de l'arrière de la chambre intérieure à l'avant de cette chambre de manière à former une plage de cuisson pour y recevoir les produits boulangers, le four à tubes vapeur comprenant en outre un réservoir de fluide (16, 16', 16", 16'") chauffé par un moyen de chauffe, dans lequel la portion de colonne (12) est en communication fluidique avec le réservoir de fluide (16, 16', 16", 16'")
**caractérisé en ce que**
le moyen de chauffe comprend au moins un élément de chauffe électrique (20, 20a) qui est disposé à l'intérieur du réservoir de fluide (16, 16', 16", 16'") en étant entouré par le fluide dans sa phase liquide contenu dans le réservoir de fluide (16, 16', 16", 16"').

2. Four à tubes vapeur selon la revendication 1, dans lequel le réservoir de fluide (16, 16', 16", 16'") comprend un espace intérieur creux (22) pour y recevoir l'élément de chauffe électrique (20, 20a), l'espace intérieur creux (22) étant de préférence disposé coaxialement dans le réservoir de fluide (16, 16', 16", 16"').

3. Four à tubes vapeur selon la revendication 2, dans lequel l'espace intérieur creux (22) a un diamètre essentiellement correspondant au diamètre extérieur de l'élément de chauffe électrique (20, 20a).

4. Four à tubes vapeur selon l'une quelconque des revendications 1 à 3, dans lequel l'au moins un élément de chauffe électrique (20, 20a) est disposé de manière amovible à l'intérieur du réservoir de fluide (16, 16', 16", 16'").

5. Four à tubes vapeur selon l'une quelconque des revendications 1 à 4, dans lequel le réservoir de fluide (16, 16', 16", 16'") comprend une ouverture (18) au niveau d'une extrémité pour y introduire l'élément de chauffe électrique (20, 20a) et pour en retirer l'élément de chauffe électrique (20, 20a), et dans lequel un couvercle est fourni pour fermer l'ouverture (18) de manière hermétique.

6. Four à tubes vapeur selon l'une quelconque des revendications 1 à 5, dans lequel chaque tube chauffant hermétique (10) comprend une portion de colonne (12) et une pluralité de portions de chauffe généralement horizontales (14), la pluralité de portions de chauffe (14) formant une pluralité de plages de cuisson essentiellement horizontales.

7. Four à tubes vapeur selon l'une quelconque des revendications 1 à 6, dans lequel les portions de chauffe (14) des tubes chauffants hermétiques (10) sont légèrement inclinées vers le haut dans la direction de la face avant du four à tubes vapeur.

8. Four à tubes vapeur selon l'une quelconque des revendications 1 à 7, dans lequel chaque portion de colonne (12) présente en sa partie inférieure une partie de tube inférieure sensiblement horizontale (12a) pour le raccordement au réservoir de fluide (16, 16', 16", 16"'), le réservoir de fluide (16, 16', 16", 16'") présentant de préférence la forme d'une conduite ayant un diamètre supérieur à la partie de tube horizontale inférieure (12a) de la portion de colonne (12).

9. Four à tubes vapeur selon l'une quelconque des revendications 6 à 8, dans lequel un réservoir de fluide respectif (16) est associé à chaque portion de colonne (12), le réservoir de fluide (16) étant raccordé à sa portion de colonne (12) au niveau de sa face donnant sur la face arrière du four à tubes vapeur, dans lequel le réservoir de fluide (16) s'étend le long de la profondeur du four à tubes vapeur, dans lequel le four à tubes vapeur comprend en outre de préférence un adaptateur (24) au niveau de la face du réservoir de fluide (16) donnant sur la face arrière du four à tubes vapeur, l'adaptateur (24) ajustant une différence de diamètre entre la portion de colonne (12, 12a) et le réservoir de fluide (16).

10. Four à tubes vapeur selon la revendication 9, comprenant en outre un passage de fluide auxiliaire (26), ce passage auxiliaire (26) communiquant au niveau d'une extrémité avec le réservoir de fluide (16) à proximité de sa face donnant sur la face avant du four et au niveau de l'autre extrémité avec la portion de colonne (12) en amont des portions de chauffe (14).

11. Four à tubes vapeur selon la revendication 9 ou 10, dans lequel le réservoir de fluide (16) est légèrement incliné vers le bas lorsqu'il s'étend vers sa face avant.

12. Four à tubes vapeur selon l'une quelconque des revendications 6 à 8, dans lequel un réservoir de fluide (16, 16', 16", 16'") est associé à au moins une partie de la pluralité de portions de colonne (12), le réservoir de fluide (16, 16', 16", 16'") s'étendant le long de la largeur du four à tubes vapeur et étant raccordé à l'au moins une partie des portions de colonne (12) sur sa face longitudinale, dans lequel le réservoir de fluide (16, 16', 16", 16'") s'étend le long de la largeur du four à tubes vapeur, une pluralité d'éléments de chauffe électriques (20a) étant de préférence disposée dans ledit réservoir de fluide (16, 16', 16", 16"').

13. Four à tubes vapeur selon la revendication 12, comprenant n réservoirs de fluide (16, 16', 16", 16"'), n étant un nombre entier supérieur ou égal à 2, la pluralité de portions de colonne (12) étant séparée en n parties et chaque partie étant raccordée à un réservoir de fluide spécifique (16, 16', 16", 16"'), des portions de colonne successives (12) le long de la largeur du four à tubes vapeur étant de préférence raccordées alternativement aux n réservoirs de fluide (16, 16', 16", 16"').

14. Four à tubes vapeur selon la revendication 12 ou 13, comprenant n réservoirs de fluide (16, 16', 16", 16"'), n étant un nombre entier supérieur ou égal à 2, ces réservoirs de fluide (16, 16', 16", 16'") étant en communication entre eux et étant rassemblés pour distribuer de la vapeur dans la pluralité de portions de colonne (12).

15. Four à tubes vapeur selon l'une quelconque des revendications 12 à 14, dans lequel ledit réservoir de fluide (16, 16', 16", 16'") est formé par un tuyau extérieur (30) et une pluralité de tuyaux intérieurs (32), lesdits tuyaux intérieurs étant dimensionnés de manière à recevoir ledit élément de chauffe électrique (20a), l'extrémité avant et l'extrémité arrière dudit tuyau extérieur étant scellées de telle sorte qu'un espace fermé est formé entre ledit tuyau extérieur (30) et lesdits tuyaux intérieurs (32), ledit espace fermé recevant ledit fluide ; dans lequel lesdits tuyaux intérieurs (32) débouchent de préférence sur le milieu ambiant aux deux extrémités et/ou dans lequel ledit réservoir de fluide (16, 16', 16", 16'") comprend de préférence un tuyau intérieur auxiliaire (34) pour y recevoir un dispositif de mesure de température.

16. Four à tubes vapeur selon l'une quelconque des revendications 12 à 15, dans lequel ladite plage de cuisson comprend une plaque ondulée (36) disposée entre des portions de chauffe avoisinantes (14).
